# FASCICULE DE BREVET EUROPEEN

(11) **EP 1 858 630 B1**
(45) Date de publication et mention de la délivrance du brevet: **26.09.2012**
(21) Numéro de dépôt: 06726056.2
(22) Date de dépôt: 09.03.2006
(51) Int. Cl.: B01D 67/00, B01D 71/68, B01D 71/52, B01D 71/82, H01M 8/10

(54) **PREPARATION D'UNE MEMBRANE PAR EXTRUSION D'UN POLYMERE THERMOPLASTIQUE PORTANT DES GROUPEMENTS IONIQUES ALCALINS.**
MEBRANHERSTELLUNGSVERFAHREN MIT EXTRUSION EINES THERMOPLASTISCHEN POLYMERS MIT ALKALISCHEN IONISCHEN GRUPPEN
MEMBRANE PREPARATION METHOD COMPRISING THE EXTRUSION OF A THERMOPLASTIC POLYMER BEARING ALKALINE IONIC GROUPINGS

(30) Priorité: 16.03.2005 FR 0502603
(43) Date de publication de la demande: 28.11.2007
(73) Titulaire: INSTITUT NATIONAL POLYTECHNIQUE DE GRENOBLE, F-38031 Grenoble (FR); Eras-Labo, F-380330 Saint-Nazaire-les-Eyme (FR); COMMISSARIAT A L'ENERGIE ATOMIQUE, 75015 Paris (FR); Centre National de la Recherche Scientifique, 75016 Paris (FR)
(72) Inventeur: SANCHEZ, Jean-Yves, F-38330 Saint Ismier (FR); IOJOIU, Cristina, F-38000 Grenoble (FR); MERCIER, Régis, F-69540 Irigny (FR); MARECHAL, Manuel, F-11590 Ouveillan (FR); EL KISSI, Nadia, F-38000 Grenoble (FR); GALIANO, Hervé, F-37300 Joue Les Tours (FR); CHABERT, France, F-38550 Auberives Sur Vareze (FR)
(74) Mandataire: Sueur, Yvette
(86) Numéro de dépôt international: PCT/FR2006/000525
(87) Numéro de publication internationale: WO 2006/097602

(56) Documents cités:
- EP-A- 1 380 619
- WO-A-02/092673
- FR-A- 2 841 255
- US-A- 3 341 366
- US-A- 4 711 907
- US-A1- 2003 187 081

## Description

La présente invention concerne un procédé de préparation de membranes constituées par un polymère thermoplastique portant des groupements ioniques alcalins.

Il est connu que les polymères portant des groupements ioniques peuvent être utilisés pour l'élaboration de membranes pour des piles à combustible. Les groupements ioniques peuvent être des groupements acides ou des groupements alcalins.

Il est également connu de préparer des films de polymère soit par coulage à partir d'une solution du polymère dans un solvant volatil, soit par extrusion. L'extrusion est avantageuse, car elle permet d'éviter l'utilisation de solvants volatils, qui peuvent être inflammables.

L'extrusion d'un polymère peut être effectuée à condition qu'il présente une stabilité thermique telle que le polymère ne soit pas dégradé à la température requise pour l'extrusion, qui dépend de la température de transition vitreuse.

La comparaison de la stabilité thermique d'un polymère ayant un squelette donné ne portant pas de groupements ioniques avec la stabilité thermique d'un polymère qui a le même squelette mais qui porte des groupements ioniques montre que le polymère avec groupements ioniques a une stabilité thermique moindre. La température de dégradation est donc plus faible et elle est généralement incompatible avec la température requise pour l'extrusion, qui dépend de la température de transition vitreuse.

Il est connu d'abaisser la température de transition vitreuse d'un polymère en le mélangeant avec un plastifiant, pour permettre une extrusion sans dégradation thermique, le plastifiant étant ensuite éliminé après extrusion. Les polymères qui ont été extrudés par ce procédé sont des polymères qui ne portent pas de groupements ioniques. Comme plastifiants utilisés pour l'extrusion de polymères thermoplastiques, on peut citer les paraffines chlorées ou non chlorées, les esters carboxyliques (tels que les adipates, les benzoates, les citrates et les phtalates), les esters phosphoriques, les toluènes disulfonamides. Par exemple, H.H.Kausch, et al., (Traité des Matériaux, tome 14, Presses Polytechniques et Universitaires Romandes, Lausanne, 2001) décrivent l'extrusion de polystyrène après incorporation de d'agents organiques à titre de plastifiant.

Les inventeurs ont alors envisagé de préparer des films de polymères portant des groupements ioniques alcalins en soumettant à l'extrusion un mélange de polymère et de plastifiant, puis en éliminant le plastifiant du film obtenu par extrusion. Cependant, il est apparu que, parmi les nombreux composés connus comme plastifiants pour l'extrusion de polymères sans groupements ioniques, tous n'étaient pas utilisables avec un polymère à groupements alcalins. Par exemple, les paraffines ont peu d'affinité pour les groupements ioniques.

Les travaux des inventeurs leur ont alors permis de définir une famille de composés utilisables comme plastifiants pour des polymères portant des groupements ioniques alcalins, lesdits plastifiants abaissant la température de transition vitreuse et permettant une température d'extrusion qui reste inférieure à la température de dégradation du polymère.

La présente invention a par conséquent pour objet un procédé de préparation d'une membrane par extrusion d'un polymère thermoplastique portant des groupements ioniques alcalins. selon la revendication 1.

Le procédé selon l'invention consiste à préparer un mélange constitué par un polymère à groupements ioniques alcalins et par au moins un plastifiant, à extruder le mélange obtenu pour former un film, puis à laver en milieu aqueux le film obtenu pour éliminer ledit (lesdits) plastifiant(s). Le(s) plastifiant (s) est (sont) choisi(s) parmi les composés non volatils qui sont stables vis-à-vis des groupements ioniques du polymère, qui sont solubles dans l'eau ou dans les solvants miscibles à l'eau, et qui portent des groupements choisis parmi :
- les groupements ayant une forte affinité pour les cations alcalins des groupements ioniques portés par le polymère ;
- les groupements ayant une forte affinité pour la partie anionique des groupements ioniques portés par le polymère.

En général, les composés portant des groupements ayant une forte affinité pour la partie anionique des groupements ioniques portés par le polymère présentent aussi une certaine affinité, plus ou moins forte, pour les cations alcalins dudit groupement ionique.

Par composé non volatil, on entend un composé dont la température d'ébullition est supérieure à la température maximale d'extrusion des polymères, de préférence > 200°C.

L'affinité pour les cations et l'affinité pour la partie anionique des groupements ioniques peuvent être évaluées respectivement par le caractère donneur ou le caractère accepteur définis sur les échelles "Donor Number" et "Acceptor Number" définies par Gutman, et publiées dans C. Reichardt, Solvents and solvent effects in organic chemistry. 2nd Edition, VCH, 1990.

Le procédé proposé peut être mis en oeuvre pour l'élaboration de membranes à partir d'un polymère thermoplastique dont la chaîne est constituée par des unités récurrentes identiques ou différentes, chaque unité récurrente comprenant au moins un groupe fonctionnel et au moins un groupe aromatique mono- ou polynucléaire, le groupe fonctionnel étant choisi parmi les groupes ester, cétone, éther, sulfure, sulfone, benzoxazole, amide et imide, au moins une partie des groupes aromatiques portant un groupe ionique alcalin.

Le groupement ionique, représenté par la formule -A^{p}-(M⁺) p dans laquelle A représente partie anionique du groupement ionique, p représente la valence de la partie anionique, et M représente un métal alcalin, peut être choisi parmi tous les groupements ioniques suffisamment dissociés dans le milieu réactionnel. A titre d'exemple, on peut citer les groupements -O⁻M⁺, les groupements sulfonate -SO₃⁻M⁺, les groupements sulfate -OSO₃⁻M⁺, les groupements carboxylate - CO₂⁻M⁺, les groupements thiocarboxylate -C (=S) O⁻M⁺, les groupements dithiocarboxylate -CS₂⁻M⁺, les groupements phosphonate -PO₃²⁻(M⁺)₂, les groupements sulfonylamidure -SO₂NH⁻M⁺, les groupements sulfonylimidure (X-SO₂NSO₂-)⁻M⁺ dans lesquels X est un groupe alkyle ayant de préférence de 1 à 6 atomes de carbone, un groupe alkyle perfluoré ou partiellement fluoré ayant de préférence de 1 à 6 atomes de carbone, un groupe alkényle ayant de préférence de 1 à 6 atomes de carbone, un groupe alkényle perfluoré ou partiellement fluoré ayant de préférence de 1 à 6 atomes de carbone, un groupe oxyalkylène CH₃-(O-(CH₂)ₘ)ₙ dans lequel de préférence 2 ≤ m < 5 et 1 ≤ n ≤ 10, ou un groupe aryle comprenant un ou plusieurs noyaux aromatiques condensés ou non et portant éventuellement un substituant.

Le procédé est particulièrement intéressant pour les polymères dans lesquels la teneur en groupements ioniques est supérieure ou égale à 1 mole par kg de polymère.

Comme exemples de polymères thermoplastiques, on peut citer les polymères qui comprennent des segments choisis parmi les segments suivants dans lesquels le groupe fonctionnel -A^{p-}(M⁺)ₚ représente n'importe lequel des groupes ioniques ci-dessus, et les indices n, m, x et y représentent chacun un nombre d'unités récurrentes :
- un polyéther dont certaines unités récurrentes portent un groupement ionique alcalin, par exemple un polyphénylène oxyde répondant à la formule I, dans laquelle R et R₁ représentent indépendamment l'un de l'autre H, un groupe alkyle ayant de préférence de 1 à 5 atomes de carbone, un groupe alkényle ayant de préférence de 2 à atomes de carbone, ou un groupe aryle comprenant un ou plusieurs noyaux aromatiques condensés ou non et portant éventuellement un substituant 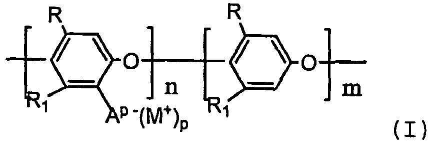
- une poly-éther-éther cétone qui est constituée par des unités comprenant dans la chaîne des fonctions éther et des fonctions cétone, et dont certaines unités portent un groupement ionique alcalin, par exemple un polyéther répondant à la formule II ci-après 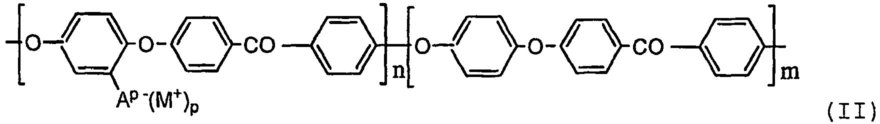
- une poly-éther cétone qui est constituée par des unités comprenant dans la chaîne des fonctions éther et des fonctions cétone, et dont certaines unités portent un groupement ionique alcalin, par exemple un polyéther répondant à la formule III ci-après 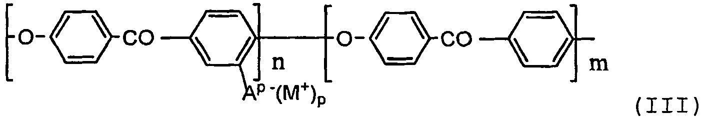
- un polybenzoxazole dont certaines unités portent un groupement ionique alcalin, par exemple un polymère dont l'unité récurrente répond à la formule IV suivante : 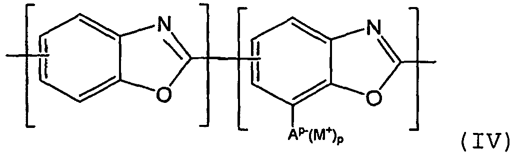
- un acide polyamique dont certaines unités portent un groupement ionique alcalin, et qui se transforme en polyimide par la chaleur de l'extrusion, par exemple le polyimide V suivant : 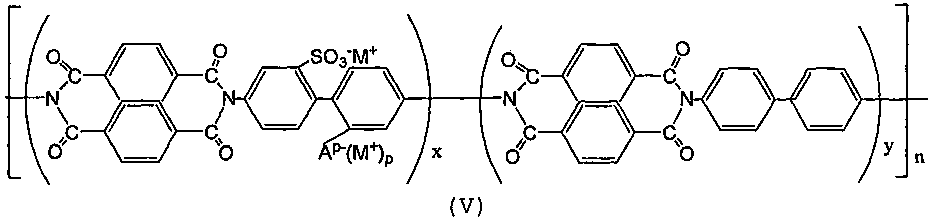
- un polyimide répondant à la formule V ;
- un polyparaphénylène, comprenant par exemple des unités répondant à la formule VI 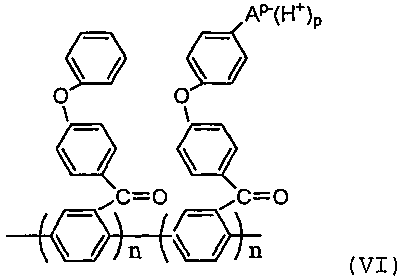 tel que le poly(4-phénoxybenzoyl-1,4-phénylène) commercialisé par la société Maxdem, Inc sous la dénomination "poly-X200" ;
- un polyphénylène sulfure, par exemple un polymère dont l'unité récurrente (VII) répond à la formule suivante : 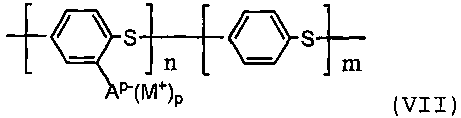
- une polyéther sulfone, par exemple un polymère répondant à la formule VIII ci-dessous dans laquelle R₂ représente une simple liaison ou un groupe -C(CH₃)- :

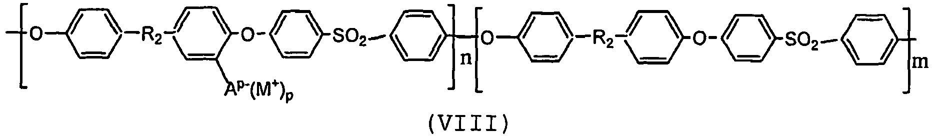

Une famille particulière de polymères est constituée par les polymères comprenant des segments choisis parmi les segments ci-dessus, dans lesquelles le groupe ionique est -SO₃M, M étant Na, Li, K. Ils sont représentées par les formules suivantes :

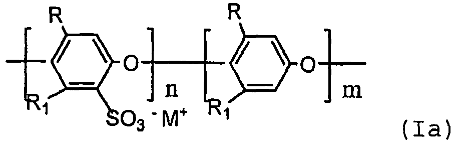

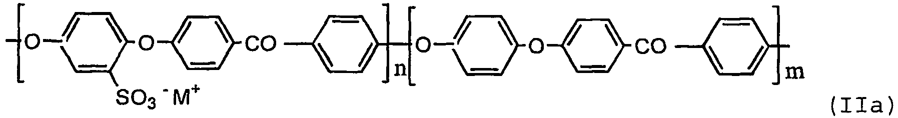

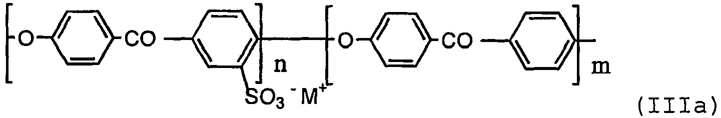

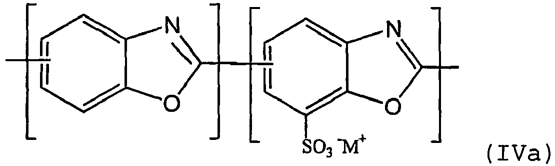

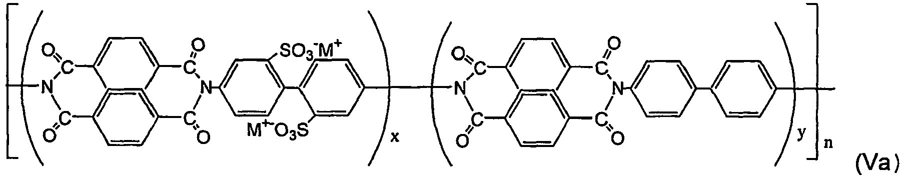

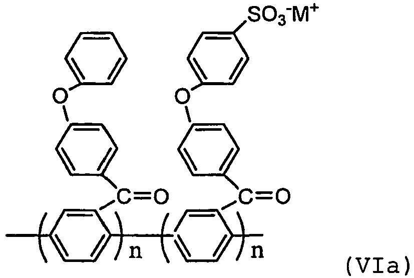

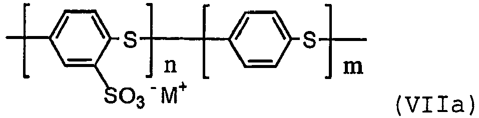

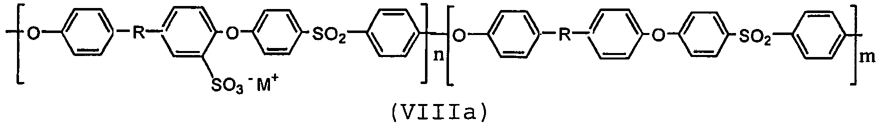

Dans les formules ci-dessus, les indices n, m, x et y représentent chacun un nombre d'unités récurrentes et ils sont choisis de sorte que la masse moléculaire du polymère soit comprise de préférence entre 20 000 g/mole et 500 000 g/mole, et que la capacité d'échange ionique CEI soit supérieure à 0,8 H⁺/kg.

Les composés utiles comme plastifiant du fait de leur forte affinité avec les cations alcalins sont choisis parmi :
- les éthers qui ont un point d'ébullition élevé, par exemple supérieur à 200°C. On peut utiliser des oligoéthers qui ont éventuellement des groupes terminaux CH₃, OH ou NH₂, par exemple un oligooxyéthylène-α,ω-diol (OED) de masse 400 g/mol (OED-400) ou de masse 200 g/mol (OED-200) ;
- les sulfones R³-SO₂-R⁴ dans lesquelles R³ et R⁴ représentent indépendamment l'un de l'autre un alkyle ayant de 1 à 3 atomes de carbone, ou un aryle comprenant un ou plusieurs noyaux aromatiques condensés ou non (exemple un groupe phényle, un groupe tolyle ou un groupe naphtyle), ou bien R³ et R⁴ forment ensemble un biradical (par exemple -R³-R⁴- représente -CH₂CH₂CH₂CH₂-) pour former un cycle avec le groupe SO₂ en donnant un sulfolane ;
- les amides carboxyliques répondant à la formule HCONR⁶R⁷ dans laquelle R⁶ et R⁷ représentent des groupes alkyles ayant de 1 à 4 atomes de carbone, par exemple le diméthylformamide.
- les amides sulfoniques tels que les tétraalkylsulfamides (par exemple le tétraéthylsulfamide) de formule (C₂H₅)₂N-SO₂-N(C₂H₅)₂.

Les composés utiles comme plastifiant du fait de leur affinité pour la partie anionique des groupements ioniques (et qui ont simultanément une affinité plus ou moins forte pour les cations) sont des composés qui ont un haut point d'ébullition (de préférence supérieur à 200°C) et une stabilité thermique élevée (de préférence supérieure à 200°C), et qui portent des fonctions protiques telles que par exemple les fonctions amides carboxyliques et les fonctions amides sulfoniques (c'est-à-dire les sulfamides) qui portent 1 ou 2 atomes d'hydrogène sur l'atome d'azote, les fonctions alcool, thiol, phénol, amine primaire et amine secondaire. Ces composés sont choisis parmi :
- les alcools choisis dans le groupe constitué par les alcanols ayant au moins 2 atomes de carbone, les polyols dérivés d'alcanes par remplacement d'au moins deux atomes d'hydrogène par un groupe OH [par exemple le sorbitol HO-CH₂-[CH(OH)]₄-CH₂OH, le pentaérythritol C(CH₂OH)₄ et le glycérol HO-CH₂-CH(OH)-CH₂OH], et les composés ayant des groupes éther [par exemple les ω-hydroxy-oligo(oxyéthylène) répondant à la formule R⁵-(OCH₂-CH₂)ₙ-OH dans laquelle R⁵ est H ou CH₃ et n = 1 à 100, de préférence 3 à 30] ;
- les mono-, di- ou triamines oligomères (par exemple les composés commercialisés sous la dénomination Jeffamine® par la société Texaco) et dans lesquels l'atome d'azote porte de 1 à 2 groupements oligo(oxyéthylène) ;
- le sulfamide H₂N-SO₂-NH₂, les sulfonamides R⁸-SO₂NH₂ dans lesquels R⁸ est un groupe alkyle qui possède de 1 à 5 atomes de carbone, ou un groupe aryle comprenant un ou plusieurs noyaux aromatiques condensés ou non (par exemple un groupe phényle, un groupe tolyle ou un groupe naphtyle).
- les amides primaires ou secondaires par exemple la formamide, la méthylformamide.

Un composé plastifiant répondant aux définitions données ci-dessus peut être introduit seul dans le polymère à extruder, ou en présence d'un composé agissant comme plastifiant du squelette du polymère, à condition que les deux composés soient miscibles.

Le mélange de polymère ionique thermoplastique et de plastifiant soumis à l'extrusion peut contenir en outre une charge, qui peut être choisie parmi les charges destinées à améliorer la tenue mécanique du film de polymère obtenu après extrusion, et les charges destinées à conférer d'autres propriétés au matériau final. Une charge destinée à améliorer la tenue mécanique peut être choisie parmi les fibres de verre, les fibres de carbone, les nanotubes de carbone, les microfibrilles de cellulose, les fibres d'alumine, des fibres de polyaramide, commercialisées sous la dénomination Kevlar®. Une charge destinée à améliorer l'hydrophilie du film obtenu après extrusion, et par conséquent sa conductivité, est l'acide phosphatoantimonique (H3).

Un polymère du type polysulfone sulfonée répondant à la formule (I) 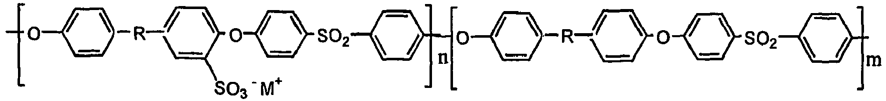 peut être obtenu à partir des polymères commercialisés par la société Solvay respectivement sous les dénominations UDEL® lorsque R₂ représente un groupe -C(CH₃)₂- et RADEl® lorsque R₂ représente une simple liaison. Ces polymères ont une structure analogue à celle des polymères (I) ci-dessus, mais ils ne portent pas de groupements ioniques. Le procédé de préparation du polymère (I) à partir du polymère précurseur UDEL ou RADEL (Ip) comprend les étapes suivantes :
1. Préparation d'une solution anhydre du polymère (Ip) dans un solvant choisi parmi les solvants organiques chlorés (par exemple le dichloroéthane DCE, le tétrachloroéthane TCE ou le dichlorométhane DCM) ou le chloroforme ;
2. préparation d'une solution anhydre de chlorosulfonate de triméthylsilyle, qui est le réactif de sulfonation ;
3. mise en contact des deux solutions anhydres, sous agitation énergique, pendant une durée de quelques heures à une température entre 30°C et 65°C, sous argon ;
4. extraction du polymère sulfoné par précipitation suivie d'une filtration dans une solution éthanolique de soude à 1 mol/L ;
5. filtration du polymère sous forme sodée et lavage à l'eau jusque au pH neutre
6. séchage du polymère sulfoné sodé à une température entre 40°C et 80°C, par exemple à 50°, sous vide dynamique.

La présente invention est illustrée par les exemples suivants, auxquels elle n'est cependant pas limitée.

Dans les exemples, divers échantillons ont été soumis à des analyses par calorimétrie différentielle à balayage, à l'aide d'un appareil commercialisé par la société TA Instruments sous la dénomination DSC. Le mode de chauffage de l'échantillon sépare les composantes du flux de chaleur total en un signal appelé réversible et un autre signal appelé irréversible. Sur le thermogramme obtenu :
- la courbe représentant le signal réversible correspond à des transitions thermiques réversibles telles que la transition vitreuse, et la courbe représentant le signal irréversible correspond à des transitions thermiques irréversibles telles que la fusion ou la cristallisation ;
- la courbe en trait plein représente le flux de chaleur total, la courbe en pointillés courts représente le signal réversible et la courbe en pointillés longs représente le signal irréversible ;
- l'énergie Q (en W/g de polysulfone) est représentée en ordonnée, et la température T en abscisse.

L'exemple 1 concerne la préparation de polysulfones sulfonés portant des groupes ioniques.

### Exemple 1

### Préparation d'un polysulfone sulfoné sodé

Au cours d'une première étape, on a préparé une solution anhydre de polymère UDEL® en dissolvant 1600 g (3,62 moles) de polymère UDEL® dans 16 1 de DCE à 50°C, puis en séchant la solution par une distillation azéotropique jusqu'à élimination de 1 1 de DCE.

Parallèlement, on a préparé une solution anhydre de chlorosulfonate de triméthylsilyle en dissolvant dans 500 ml de DCE sec sous agitation magnétique et sous argon, 472 g (4,34 moles) de chlorure de triméthylsilane et 422 g (3,6 moles) d'acide chlorosulfonique (ClSO₃H), tous les constituants étant anhydres, pendant une durée de 2 h, HCl formé étant piégé.

Au cours d'une deuxième étape, on a mélangé les deux solutions anhydres sous balayage d'argon et on a maintenu le mélange pendant 17 h à 35°C sous agitation énergique.

Au cours d'une troisième étape, on a précipité la solution dans l'éthanol contenant 1 mole/L de NaOH. On a séparé par filtration le précipité formé, on l'a lavé trois fois à l'éthanol, puis à l'eau distillée jusqu'à pH neutre. Le précipité a ensuite été séché à l'air à 20°C pendant une durée de 24 h, puis sous une pression de 20 mbar à 55°C pendant une durée de 72 h. Le polymère sulfoné ainsi obtenu (PSUSNa) présente un degré de sulfonation (capacité d'echange ionique CEI) de 0,64 H⁺/mol (1,3 meq/g).

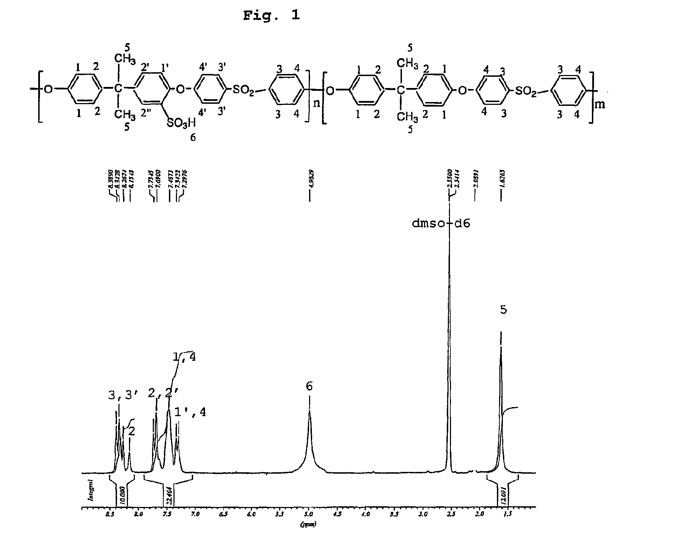

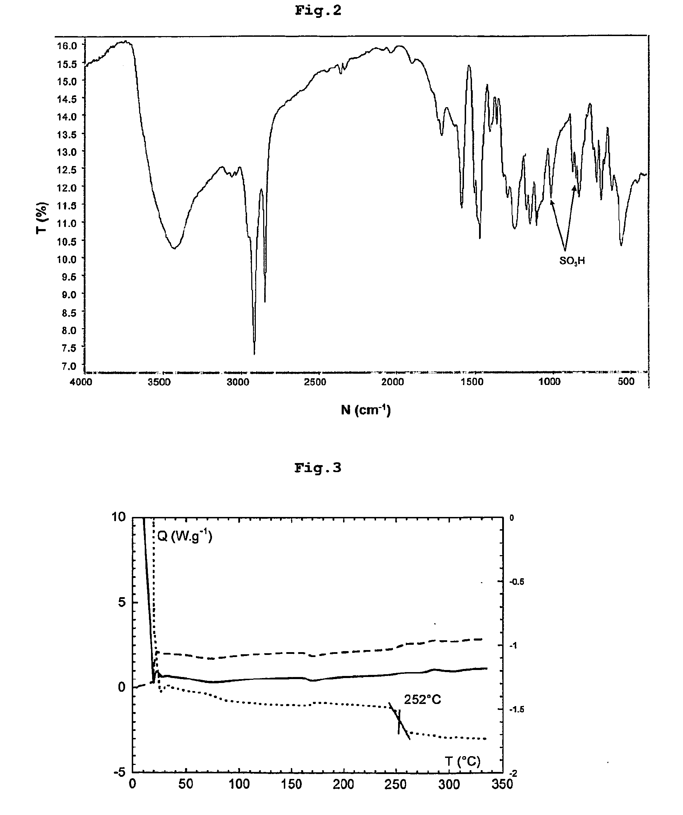

Les CEI des polymères sulfonés ont été déterminées par trois techniques : la RMN-H¹, la spectroscopie infra-rouge et le dosage acide-base. Le dosage acide-base est effectué après immersion du polymère sous forme sodée dans une solution d'acide chlorhydrique 1 mol/l pendant 12 heures à température ambiante pour échanger le sodium en proton. Le polymère sulfoné sous forme acide est ensuite filtré et séché sous vide à 50°C pendant 24 h. 1 g de polymère sec est dissous dans 100 ml de DiéthyleneGlycolMonométhylEther (DGME) et dosé en présence d'un indicateur coloré (Methyl orange) par une solution de soude à 2,5 10⁻³ mol/l dans le DGME. La figure 1 représente de spectre RMN-H¹ et la figure 2 représente le spectre IR. Sur la figure 2, T désigne la transmission et N désigne le nombre d'ondes.

Le thermogramme DSC du polysulfone est représenté sur la figure 3, et il montre que la température de fusion est de 252°C.

### Exemples 2 à 4

Les exemples 2 à 4 démontrent l'aptitude à l'extrusion de différentes compositions contenant un polysulfone sulfoné et un plastifiant, et décrivent l'élaboration de membranes. Ils décrivent des essais de rhéométrie dynamique et des extrusions réalisées avec un Rhéomètre capillaire Gottfert 1500. La rhéométrie dynamique, avec l'utilisation de l'équivalence temps-température, permet de caractériser les mélanges dans les conditions de gradient de cisaillement qu'ils subissent dans une extrudeuse. La rhéométrie capillaire, en raison de sa maniabilité et des quantités modérées de polymère consommé, est bien adaptée à une étude d'extrudabilité. Les données obtenues par les deux types d'essais de rhéométrie sont représentatives d'une extrusion en extrudeuse mono ou bi-vis.

### Exemple 2

### Polysulfone sulfoné / sorbitol

Cet exemple a été réalisé en utilisant une fraction, dite PSUSNA, d'un polysulfone obtenu selon le mode opératoire de l'exemple 1 et de sorbitol comme plastifiant. PSUSNA désigne le produit constitué de particules ayant une dimension inférieure à 300 µm, obtenu par broyage du polysulfone obtenu selon l'exemple 1, puis tamisage à une dimension inférieure à 300 µm.

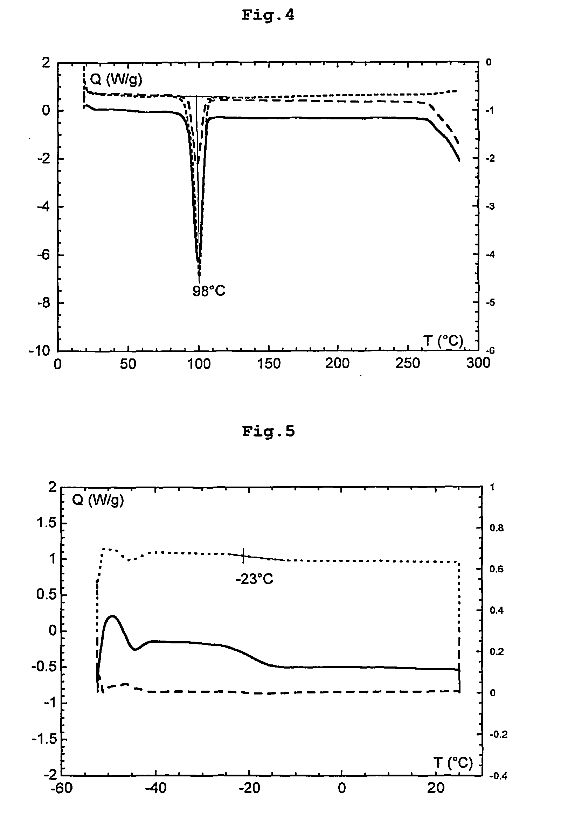

La figure 4 représente le thermogramme DSC du sorbitol et elle montre que le sorbitol a une température de fusion de 98°C (point d'inflexion sur la courbe du signal irréversible).

Le mélange de PSUSNA et de sorbitol (dans un rapport en masse de 40/60, correspondant à un rapport en volume de 44/56) a été réalisé dans un mélangeur chauffant de type Rheomix de Haake comprenant une chambre de 70 cm³ et des rotors contrarotatifs de 25 mm de diamètre. La chambre est surmontée d'une trémie par laquelle on effectue le remplissage. La température du mélangeur était régulée à 180°C. La vitesse de rotation des rotors était fixée à 80 tr/min, ce qui correspond à un cisaillement moyen de 80 s⁻¹.

8,8 g de PSUSNA et 18,6 g de sorbitol ont été pesés séparément à 1 mg près, puis ils ont été préalablement mélangés par agitation mécanique avant d'être versés dans la trémie du mélangeur. Les rotors ont été actionnés pendant 20 minutes. Le produit obtenu est un liquide transparent, de couleur ambrée, peu visqueux à la température de réalisation du mélange, soit 180°C. A température ambiante, le produit devient souple.

La figure 5 représente le thermogramme DSC du mélange. Elle montre que la température de transition vitreuse est de -23°C.

Le mélange PSUSNA / sorbitol obtenu a été broyé dans un broyeur mécanique à lames (commercialisé sous la marque IKA) équipé d'une grille de 2 mm. Les grains récupérés après broyage ont été placés dans une étuve ventilée à 60°C pendant 4 heures pour éliminer l'eau qui gênerait l'extrusion.

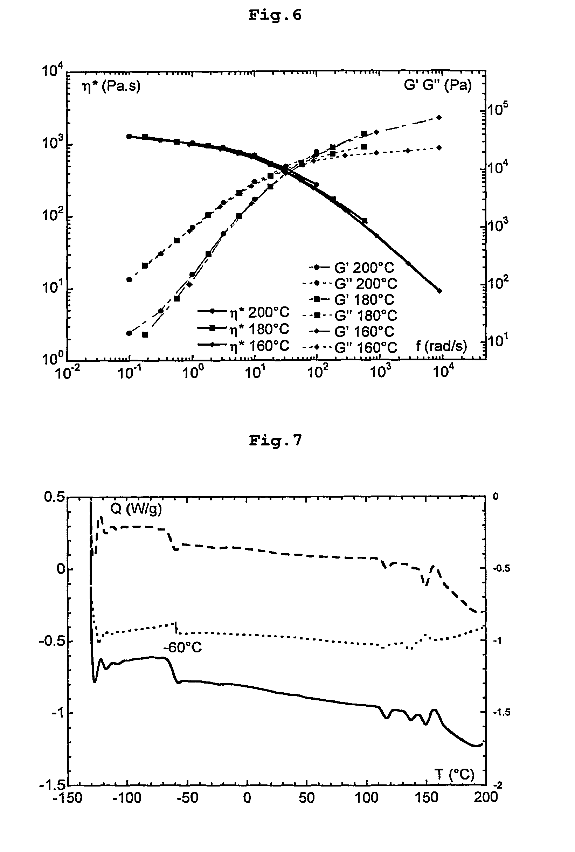

Pour qu'une composition soit extrudable, il faut que sa viscosité soit suffisamment faible pour que la composition coule à la température d'extrusion. La viscosité du mélange PSUSNA / sorbitol a été caractérisé en rhéométrie dynamique avec un rhéomètre ARES de la société Rheometrics, de 160 à 200°C et pour des gradients de cisaillements entre 10⁻¹ et 10² s⁻¹. A partir de ces mesures de viscosité, le comportement du mélange en extrusion a été prévu par le principe de la superposition temps-température. La figure 6 montre le comportement du mélange à 160°C, 180°C et 200°C. En ordonnée, η* représente la viscosité, et en abscisse, f représente la fréquence de sollicitation de l'échantillon. Les courbes en trait fin représentent le module élastique ou module de conservation G' et le module visqueux ou module de perte G". Les courbes en trait gras représentent la viscosité η*.

Ces courbes montrent que, pour des cisaillements représentatifs de l'extrusion, la viscosité du mélange PSUSNA / sorbitol est proche de 10 Pa.s à 10⁴ s⁻¹, ce qui est très faible. Le mélange peut donc être extrudé.

On a préparé un film par extrusion du mélange PSUSNA /sorbitol à l'aide du rhéomètre capillaire Gottfert 1500. Ce rhéomètre comprend un réservoir chauffant dans lequel le mélange est introduit. Un piston pousse le mélange fondu à travers une filière plate d'épaisseur 0,8 mm. La température d'extrusion, qui doit être supérieure à la température de transition vitreuse du mélange pour que le polymère coule, mais inférieure à la température d'évaporation du plastifiant, est de 200°C dans le cas présent. L'épaisseur du film en sortie de filière est de 0,8 mm, et l'étirage du film permet de diminuer son épaisseur jusqu'à 0,1 mm.

Le film est ensuite refroidi à température ambiante. Il est transparent et sa surface ne présente pas de défauts.

Le film est ensuite immergé dans une solution d'acide chlorhydrique à 0,5 mol/l pendant 24 heures à température ambiante pour éliminer le plastifiant qui se solubilise dans l'eau et pour acidifier la membrane. Une analyse RMN du matériau après séchage permet de vérifier que le plastifiant est totalement éliminé, le spectre RMN étant identique au spectre du polysulfone de départ représenté sur la figure 1.

Les résultats électrochimiques sont obtenus par des mesures d'impédance dans une cellule électrochimique dans laquelle le film constitue l'électrolyte et il est placé entre deux électrodes d'or, en appliquant à la cellule une tension sinusoïdale de faible amplitude, autour de sa tension d'équilibre. La conductivité protonique du film, mesurée à 20°C et 90% d'humidité, est égale à 140 mS.cm⁻¹.

### Exemple 3

### Polysulfone sulfoné / polyol

Cet exemple a été réalisé en utilisant le composé PSUSNA utilisé dans l'exemple 2, et un polyol comme plastifiant. Le mélange contenait 75% en masse, soit 72% en volume, de polysulfone.

Le plastifiant est le polyol commercialisé sous la dénomination ET570 par la société Shell. Sa température de fusion, déterminée par DSC, est de -60°C, tel que montré sur la figure 7, qui représente le thermogramme DSC du polyol.

Le mélange PSUSNA / polyol été réalisé dans un mélangeur Rhéomix analogue à celui utilisé dans l'exemple 2. La température du mélangeur était régulée à 180°C. La vitesse de rotation des rotors était fixée à 80 tr/min, ce qui correspond à un cisaillement moyen de 80 s⁻¹.

22,56 g de PSUSNA et 7,54 g d'imidazole ont été pesés séparément à 1 mg près, puis ils ont été préalablement mélangés par agitation mécanique avant d'être versés dans la trémie du mélangeur. Les rotors ont été actionnés pendant 20 minutes. Le produit obtenu est un liquide transparent, de couleur marron clair, peu visqueux à la température de réalisation du mélange, soit 180°C. A température ambiante, le produit devient un solide, il est homogène à l'oeil nu.

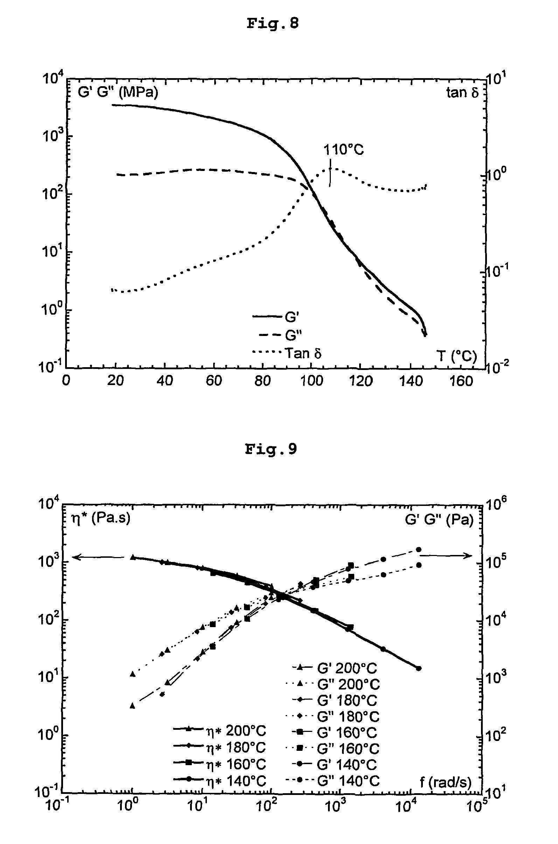

La transition vitreuse du mélange a été déterminée par DSC. La figure 8 représente le thermogramme DSC du mélange, et elle montre que la température de transition vitreuse est de 180°C.

Le mélange PSUSNA / polyol a été broyé dans un broyeur mécanique à lames (commercialisé sous la marque IKA) équipé d'une grille de 2 mm. Les grains récupérés après broyage ont été placés dans une étuve ventilée à 80°C pendant 4 heures pour éliminer l'eau qui gênerait l'extrusion.

La viscosité du mélange PSUSNA/polyol a été caractérisée en rhéométrie dynamique avec un rhéomètre ARES de la société Rheometrics, de 140°C à 200°C et pour des gradients de cisaillements entre 10⁻¹ et 10² s⁻¹. La figure 9 montre le comportement du mélange à 140°C, 160°C, 180°C et 200°C. En ordonnée, η* représente la viscosité, et en abscisse, f représente la fréquence de sollicitation de l'échantillon. Les courbes en trait fin représentent le module élastique ou module de conservation G' et le module visqueux ou module de perte G". Les courbes en trait gras représentent la viscosité η*. A 200°C, le mélange est rhéofluidisant, et sa viscosité est de 10 Pa.s à 10⁴ s⁻¹. ce qui est très faible. Le mélange peut donc être extrudé.

On a préparé un film par extrusion d'un mélange PSUSNA/polyol à l'aide du rhéomètre capillaire Gottfert 1500 précité. La température d'extrusion choisie dans le cas présent est de 200°C. L'épaisseur du film en sortie de filière est de 0,8 mm, et l'étirage du film permet de diminuer son épaisseur jusqu'à 0,1 mm.

Le film est ensuite refroidi à température ambiante. Il est transparent et sa surface ne présente pas de défauts.

Le film est ensuite immergé dans une solution d'acide chlorhydrique à 0,5 mol/l pendant 24 heures à température ambiante pour éliminer le plastifiant qui se solubilise dans l'eau et pour acidifier la membrane.

Comme dans l'exemple 2, les résultats électrochimiques sont obtenus par des mesures d'impédance dans une cellule électrochimique à laquelle est appliquée une tension sinusoïdale de faible amplitude, autour de sa tension d'équilibre. La conductivité protonique du film, mesurée à 20°C et 98% d'humidité, est égale à 30 ± 6 mS.cm⁻¹.

### Exemple 4

### Polysulfone sulfoné / OED-400 / H3

Cet exemple a été réalisé en utilisant le composé PSUSNA utilisé dans l'exemple 2, et un oligooxyéthylène-α,ω-diol de masse 400 g/mol comme plastifiant, et l'acide phosphatoantimonique H3 comme charge. Le mélange contenait 33% en masse, soit 32% en volume de plastifiant. Dans la fraction PSUSNA+H3, H3 représente 10% en volume par rapport à PSUSNA.

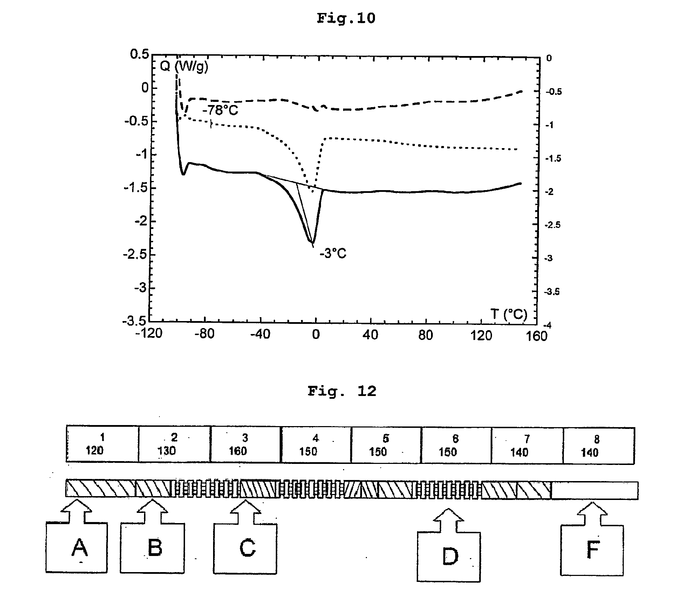

OED-400 a une température de transition vitreuse, déterminée par DSC, de -78°C, tel que montré sur la figure 10, qui représente le thermogramme DSC du polyol.

Le mélange PSUSNA / OED-400 / H3 été réalisé dans un mélangeur Rhéomix analogue à celui utilisé dans l'exemple 2. La température du mélangeur était régulée à 120°C. La vitesse de rotation des rotors était fixée à 80 tr/min, ce qui correspond à un cisaillement moyen de 80 s⁻¹.

39,56 g de PSUSNA, 16,95 g de OED-400 et 7,05 g de H3 ont été pesés séparément à 1 mg près, puis ils ont été préalablement mélangés par agitation mécanique avant d'être versés dans la trémie du mélangeur. Les rotors ont été actionnés pendant 20 minutes. Le produit obtenu est un liquide transparent, de couleur jaune pâle, peu visqueux à la température de réalisation du mélange, soit 120°C. A température ambiante, le produit devient un solide, il est homogène à l'oeil nu et au microscope électronique à balayage.

Le mélange PSUSNA / OED-400 / H3 a été broyé dans un broyeur mécanique à lames (commercialisé sous la marque IKA) équipé d'une grille de 2 mm. Les grains récupérés après broyage ont été placés dans une étuve ventilée à 60°C pendant 4 heures pour éliminer l'eau qui gênerait l'extrusion.

On a préparé un film par extrusion d'un mélange PSUSH/OED-400/H3 à l'aide du rhéomètre capillaire Gottfert 1500 précité. La température d'extrusion choisie dans le cas présent est de 120°C. L'épaisseur du film en sortie de filière est de 0,8 mm, et l'étirage du film permet de diminuer son épaisseur jusqu'à 0,1 mm.

Le film est ensuite refroidi à température ambiante. Il est transparent et sa surface ne présente pas de défauts.

Le film est ensuite immergé dans une solution d'acide chlorhydrique à 0,5 mol/l pendant 24 heures à température ambiante pour éliminer le plastifiant qui se solubilise dans l'eau et pour acidifier la membrane.

### Exemples 5 à 7

Dans ces exemples, l'extrusion a été effectuée à l'aide d'une extrudeuse commercialisée par la société DACA sous la marque Microcompounder.

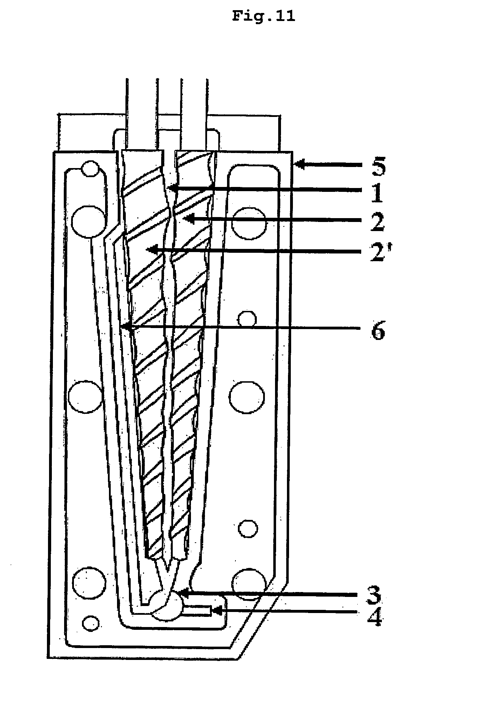

Le corps de l'extrudeuse est formée par 2 plaques similaires s'assemblant entre elles. La figure 11 représente une vue de face de l'une des plaques (5) telle que visible lorsque l'extrudeuse est ouverte pour son nettoyage. Elle comprend un fourreau (1) dans lequel sont placées deux vis coniques contrarotatives (2, 2'), des cartouches chauffantes (non représentées) insérées dans les deux plaques de manière à maintenir une température homogène dans le fourreau, un capteur de température (non représenté), un capteur de couple (non représenté), une vanne à deux positions (3), une filière interchangeable 4, et un canal (6) reliant la partie inférieure à la partie supérieure du fourreau.

Le volume du fourreau (1) est de 4,5 cm³.

Les 2 vis coniques contrarotatives (2, 2') ont une longueur de 100 mm et un diamètre maximal de 10 mm. Leur vitesse de rotation peut varier de 0 à 360 tours par minute. Dans le présent exemple, la vitesse était de 100 tours par minute, ce qui représente un cisaillement moyen d'environ 1500 s⁻¹, c'est-à-dire un cisaillement représentatif des conditions industrielles d'extrusion.

La vanne à 2 positions (3) peut être soit en position 'Recyclage', qui permet au matériau en bout de vis de remonter pour entrer à nouveau dans le fourreau, soit en position 'Extrusion', pour faire sortir le matériau à travers la filière. Sur la figure, la vanne (3) est en position Recyclage.

La filière interchangeable (4) utilisée dans le présent exemple est une filière axisymétrique de diamètre 2 mm. Dans l'extrudeuse Microcompouder, l'extrusion est effectuée dans les conditions suivantes. Les plaques de l'extrudeuse sont régulées à une température Te donnée. Le mélange à extruder est placé dans une trémie d'alimentation, et poussé par un piston dans le fourreau. À l'intérieur du fourreau, les deux vis co-rotatives mélangent et fondent le matériau, et le forcent vers le bas. Quand le matériau atteint le bas du fourreau, il remonte par le canal extérieur (6) puis entre à nouveau dans le fourreau pour être mélangé. Ce processus peut être répété plusieurs fois, pendant une durée De. La température du mélange polymère / plastifiant est mesurée en temps réel par le capteur de température. Un capteur de couple (non représenté) mesure la résistance Re engendrée par le matériau pendant la rotation des vis, dans le gamme de 0 à 5 N.m. À la fin du procédé de mélange, la vanne est tournée en position extrusion, afin de faire sortir le matériau à travers la filière (4).

### Exemple 5

### Polysulfone sulfoné / sorbitol

Cet exemple a été réalisé en utilisant le composé PSUSNA utilisé dans l'exemple 2, et du sorbitol comme plastifiant. Le mélange contenait 60% en masse, soit 56% en volume de plastifiant.

L'extrusion a été effectuée avec 4,02 g de mélange PSUSNA-sorbitol, avec une température de plaques Te de 180°C, et une durée De de 5 min.

La température du mélange, mesurée en temps réel par le capteur de température, est restée à 180°C, ce qui signifie que le mélange ne s'est pas échauffé. Le couple mesuré était de 1,2 N.m, ce qui veut dire que le matériau coule facilement. À la fin du procédé de mélange, la vanne a été tournée en position extrusion, afin de faire sortir le matériau à travers la filière. L'extrudat obtenu est lisse et souple à température ambiante.

### Exemple 6

### Polysulfone sulfoné/OED-400-fibres de verre

Cet exemple a été réalisé en utilisant le composé PSUSNA utilisé dans l'exemple 2, un oligooxyéthylène-α,ω-diol de masse 400 g/mol OED-400 comme plastifiant, et des fibres de verre comme charge. Le mélange contenait 38% en masse, soit 40% en volume de plastifiant. Dans la fraction PSUSNA+fibres de verre, les fibres de verre représente 10% en volume par rapport à PSUSNA.

Le mélange PSUSNA / OED-400 / fibres de verre été réalisé dans un mélangeur Rhéomix analogue à celui utilisé dans l'exemple 2. La température du mélangeur était régulée à 120°C. La vitesse de rotation des rotors était fixée à 80 tr/min, ce qui correspond à un cisaillement moyen de 80 s⁻¹.

22,58 g de PSUSNA, 14,0 g de OED-400 et 2,4 g de fibre de verre ont été pesés séparément à 1 mg près, puis ils ont été préalablement mélangés par agitation mécamnique avant d'être versés dans la trémie du mélangeur. Les rotors ont été actionnés pendant 20 minutes. Le produit obtenu est un liquide transparent, de couleur jaune, peu visqueux à la température de réalisation du mélange, soit 120°C. A température ambiante, le produit devient un solide, il est homogène à l'oeil nu et au microscope électronique à balayage.

Le mélange PSUSNA / OED-400 / fibres de verre a été broyé dans un broyeur mécanique à lames (commercialisé sous la marque IKA) équipé d'une grille de 2 mm. Les grains récupérés après broyage ont été placés dans une étuve ventilée à 60°C pendant 4 heures pour éliminer l'eau qui gênerait l'extrusion.

L'extrusion a été effectuée dans l'extrudeuse Microcompounder, avec une température de plaques Te de 140°C, et une durée De de 5 min.

La température du mélange, mesurée en temps réel par le capteur de température, est restée à 140°C, ce qui signifie que le mélange ne s'est pas échauffé. Le couple mesuré était de 3 N.m, ce qui veut dire que le matériau coule facilement à 140°C. À la fin du procédé de mélange, la vanne a été tournée en position extrusion, afin de faire sortir le matériau à travers la filière. L'extrudat obtenu est lisse et souple à température ambiante.

### Exemple 7

### Poly-éther-éthercétone sulfonée sodé / OED-400

Cet exemple a été réalisé en utilisant une poly-éther-éthercétone sulfonée sodée comme polymère et OED-400 comme plastifiant. Le mélange contenait 51% en masse, soit 55% en volume de plastifiant. La poly-éther-éther-cétone sulfonée sodée a été préparé selon le mode opératoire suivant.

On a solubilisé 50 g de poly-éther-éther-cétone commercialisé par la société Goodfellow dans 500 ml d'acide sulfurique 96 % à température ambiante, sous atmosphère d'argon. La dissolution est totale après 4 heures et conduit à une solution marron. On a ajouté ensuite 146 ml d'oléum à 20% de SO₃ pour atteindre une concentration en acide sulfurique égale à 98,5 %. On a porté le mélange réactionnel à une température de 45°C et on l'a maintenu à cette température pendant 45 min. On a ensuite précipité lentement le mélange réactionnel, sous agitation mécanique, dans 5 l d'eau glacée. On a filtré le précipité, et on l'a lavé plusieurs fois à l'eau distillée, jusqu'à atteindre le pH de l'eau distillée utilisée. On a séché ensuite le précipité sous vide dynamique de 10 mbar pendant 3 jours à 60°C. Le dosage a été effectué en présence d'un indicateur coloré (Methyl orange) par une solution de soude à 2,5 10⁻³ mol/l dans le DGME, en dissolvant 1 g de polymère sec dans 100 ml de Diéthylène-GlycolMonométhylEther (DGME). On a obtenu une CEI de 1,3 meq/g. Le polymère acide ainsi obtenu a été repris dans une solution aqueuse 1 mol/l de soude et on a agité pendant 4 heures. Le précipité a ensuite été filtré, lavé à l'eau distillée jusqu'à pH neutre, puis séché sous vide dynamique de 10 mbar pendant 2 jours à 70°C.

L'extrusion a été effectuée dans l'extrudeuse Microcompounder, avec une température de plaques Te de 140°C, et une durée De de 5 min, avec un mélange contenant 0,90 g de poly-éther-éthercétone sodée et 0,95 g de OED-400 a été introduit dans l'extrudeuse.

La température du mélange, mesurée en temps réel par le capteur de température, est restée à 140°C, ce qui signifie que le mélange ne s'est pas échauffé. Le couple mesuré était de 2,5 N.m, ce qui veut dire que le matériau coule facilement à 140°C. À la fin du procédé de mélange, la vanne a été tournée en position extrusion, afin de faire sortir le matériau à travers la filière. L'extrudat obtenu est lisse et souple à température ambiante.

### Exemple 8

### Préparation d'une membrane

On a préparé une membrane du polymère sulfoné obtenu selon l'exemple 1, en utilisant comme plastifiant un oligo-oxyéthylène-α,ω-diol OED. Diverses préparations ont été effectuées avec un OED-400 (Tg = -78°C), ou avec un OED-200 (Tg = -86°C).

On a utilisé une extrudeuse bi-vis co-rotative équipée de vis interpénétrées et d'un fourreau (figure 11). Elle permet d'obtenir des distributions de temps de séjour étroites. L'équilibre des pressions autorise des couples, des vitesses de cisaillement et des débits importants. La figure 12 représente une vue latérale du profil d'une vis de l'extrudeuse utilisée.

Le profil de vis comprend une zone d'alimentation A, de trois zones de malaxage (B) qui permettent d'augmenter le temps de séjour du mélange dans l'extrudeuse et de favoriser le cisaillement, et de trois zones de transport (C) pour convoyer le mélange vers une filière plate (D). La longueur totale de la vis est de 640 mm.

Le profil des températures le long des vis est choisi de manière à:
- éviter la dégradation du polysulfone sulfoné dans la zone (1)
- éviter la vaporisation du oligooxyéthylène-α,ω-diol (2)
- garantir un mélange homogène des deux composants (3)à (6) en ayant une viscosité faible
- abaisser la viscosité du mélange (7) et (8) pour garantir la tenue du film en sortie de filière.

Le polysulfone sulfoné est introduit au début de la zone d'alimentation (A). Le débit d'alimentation en polysulfone sulfoné est contrôlé par un doseur pondéral. Il s'agit d'une trémie (non représentée) placée sur une balance (non représentée) qui permet de mesurer en permanence le débit par perte de masse. Un régulateur pilote la vitesse de rotation des vis de l'extrudeuse, afin d'obtenir le débit recherché. La capacité utile du doseur est de 2 kg et la gamme de débit accessible avec le polysulfone sulfoné varie de 0,2 à 2,5 Kg/h.

Le OED est introduit à la fin de la zone d'alimentation (A), à l'aide d'une pompe volumétrique.

Les essais d'extrusion ont été effectués avec le profil de vis décrit ci-dessus, en utilisant des polysulfones sulfonées PSUNA ayant divers taux de groupements ioniques, obtenus selon le procédé de l'exemple 1 en faisant varier les proportions d'agents de sulfonation pour obtenir divers taux de groupements ioniques, et en utilisant soit OED-200, soit OED-400 comme plasitifant.

Des mesures de conductivité ionique ont été effectuées de la manière sur les membranes obtenues selon la technique décrite dans l'exemple 2.

Le taux de gonflement des membranes obtenues par extrusion a été déterminé selon le processus suivant. Une membrane extrudée est immergée dans solution d'acide chlorhydrique à 0,5 mol/l pendant 24 heures à température ambiante pour éliminer le plastifiant qui se solubilise dans l'eau et pour acidifier la membrane. La masse M₀ dela membrane est alors déterminée par pesée. La membrane est ensuite séchée sous vide dynamique de 10 mbars à 60° pendant 72 h. Après refroidisement à la température ambiante, la masse de la membrane M₁ est à nouveau déterminée par pesée. Le taux de gonflement est Tₓ = [(M₀-M₁)/M₁]x100/.

Les conditions d'extrusion et les résultats des divers essais sont rassemblées dans le tableau suivant. La conductivité C à 25°C, 100%HR, est exprimée en mS/cm. Le taux de gonflement Tx est donné en pourcentage.

| ESSAI | Type de OED | | Taux OED % | PSUS CEI (meq/g) | C | Tx |
|---|---|---|---|---|---|---|
| | OED-200 | OED-400 | | | | |
| XTRU3 | | X | 10 | 1,22 | 7 10⁻³ | 70 |
| XTRU7 | | X | 10 | 1,14 | 5 10⁻³ | 50 |
| EX4 | | X | 30 | 1,39 | 4,61 10⁻³ | 96 |
| EX7 | | X | 20 | 1,39 | 6,2 10⁻³ | 83,5 |
| EX8 | X | | 20 | 1,39 | 4,1 10⁻³ | 89 |
| EX10 | X | | 20 | 1,39 | 4,6 10⁻³ | 82,5 |

## Revendications

1. Procédé pour la préparation d'une membrane par extrusion d'un polymère thermoplastique portant des groupements ioniques alcalins, consistant à préparer un mélange constitué par un polymère à groupements ioniques alcalins de formule -A^{P-}(M⁺)ₚ dans laquelle A représente la partie anionique du groupement ionique, p représente la valence de la partie anionique, et M représente un métal alcalin et par au moins un plastifiant, à extruder le mélange obtenu pour former un film, puis à laver en milieu aqueux le film obtenu pour éliminer ledit (lesdits) plastifiant(s), **caractérisé en ce que** le(s) plastifiant(s) a(ont) une température d'ébullition supérieure à la température maximale d'extrusion du polymère, est (sont) stable(s) vis-à-vis des groupements ioniques du polymère, est(sont) soluble(s) dans l'eau ou dans les solvants miscibles à l'eau, et est(sont) choisi(s) parmi:
i)
- les oligoéthers qui ont éventuellement des groupes terminaux CH₃, OH ou NH₂ ;
- les sulfones R³-SO₂-R⁴ dans lesquelles R³ et R⁴ représentent indépendamment l'un de l'autre un alkyle ayant de 1 à 3 atomes de carbone, ou un aryle comprenant un ou plusieurs noyaux aromatiques condensés ou non, ou bien R³ et R⁴ forment ensemble un biradical pour former un cycle avec le groupe SO₂ en donnant un sulfolane
- les amides carboxyliques répondant à la formule HCONR⁶R⁷ dans laquelle R⁶ et R⁷ représentent des groupes alkyles ayant de 1 à 4 atomes de carbone ;
- les amides sulfoniques tels que les tétraalkylsulfamides ;
ii) les plastifiants possédant des fonctions protiques choisies parmi les fonctions amides carboxyliques qui portent 1 ou 2 atomes d'hydrogène sur l'atome d'azote, et les fonctions amides sulfoniques qui portent 1 ou 2 atomes d'hydrogène sur l'atome d'azote, les fonctions alcool, thiol, phénol, amine primaire et amine secondaire, lesdits plastifiants étant choisis parmi :
- les alcanols ayant au moins 2 atomes de carbone, les polyols dérivés d'alcanes par remplacement d'au moins deux atomes d'hydrogène par un groupe OH, et les composés ayant des groupes éther;
- les mono-, di- ou triamines oligomères et dans lesquels l'atome d'azote porte de 1 à 3 groupements oligo(oxyéthylène) ;
- le sulfamide H₂N-SO₂-NH₂, les sulfonamides R⁸-SO₂NH₂ dans lesquels R⁸ est un groupe alkyle qui possède de 1 à 5 atomes de carbone, ou un groupe aryle comprenant un ou plusieurs noyaux aromatiques condensés ou non ;
- les amides primaires ou secondaires.

2. Procédé selon la revendication 1, **caractérisé en ce que** le groupement ionique alcalin est choisi parmi les groupements -O⁻M⁺, les groupements sulfonate -SO₃⁻M⁺, les groupements sulfate -OSO₃⁻M⁺, les groupements carboxylate -CO₂⁻M⁺, les groupements thiocarboxylate -C(=S)O⁻M⁺, les groupements dithiocarboxylate -CS₂⁻M⁺, les groupements phosphonate -PO₃²⁻(M⁺)₂, les groupements sulfonylamidure -SO₂NH⁻M⁺, les groupements sulfonylimidure (X-SO₂NSO₂⁻)⁻M⁺ dans lesquels X est un groupe alkyle, un groupe alkyle perfluoré ou partiellement fluoré, un groupe alkényle, un groupe alkényle perfluoré ou partiellement fluoré, un groupe oxyalkylène CH₃-(O-(CH₂)ₘ)ₙ dans lequel 2 ≤ m < 5 et 1 ≤ n ≤ 10, ou un groupe aryle.

3. Procédé selon la revendication 1, **caractérisé en ce que** le polymère thermoplastique est un polymère dont la chaîne est constitué par des unités récurrentes identiques ou différentes, chaque unité récurrente comprenant au moins un groupe fonctionnel et au moins un groupe aromatique mono- ou polynucléaire, le groupe fonctionnel étant choisi parmi les groupes ester, cétone, éther, sulfure, sulfone, benzoxazole, amide et imide, au moins une partie des groupes aromatiques portant un groupe ionique alcalin.

4. Procédé selon la revendication 1, **caractérisé en ce que** le polymère thermoplastique est un polymère qui comprend des segments choisis parmi les segments suivants dans lesquels les indices n, m, x et y représentent chacun un nombre d'unités récurrentes :
- un polyphénylène oxyde répondant à la formule I, dans laquelle R et R₁ représentent indépendamment l'un de l'autre H, un groupe alkyle, un groupe alkényle, ou un groupe aryle comprenant un ou plusieurs noyaux aromatiques condensés ou non et portant éventuellement un substituant 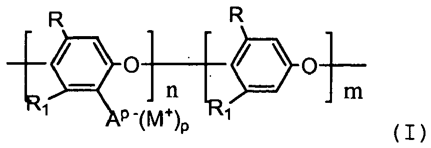
- une poly-éther-éther cétone répondant à la formule II ci-après 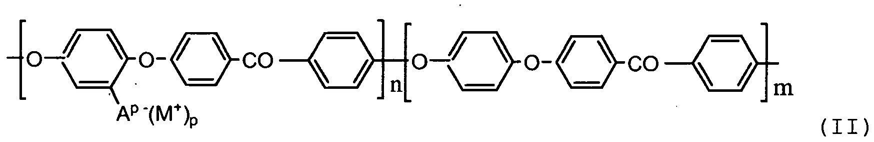
- une poly-éther-cétone répondant à la formule III ci-après 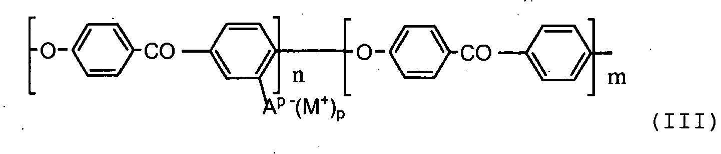
- un polybenzoxazole dont l'unité récurrente répond à la formule IV suivante : 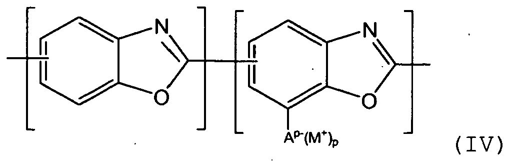
- un acide polyamique qui se transforme par la chaleur de l'extrusion, en polyimide (V) suivant : 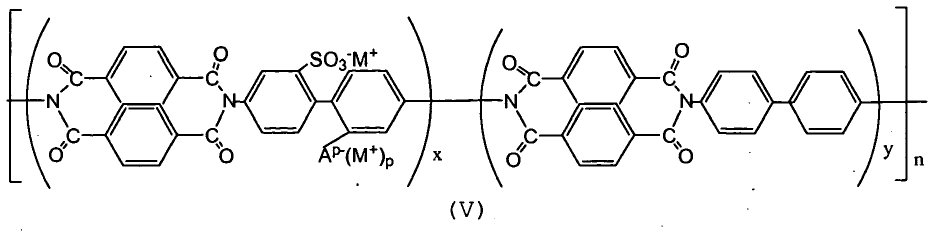
- un polyimide répondant à la formule V ;
- un polyparaphénylène, comprenant par exemple des unités répondant à la formule VI 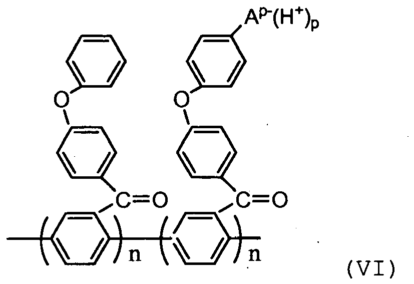
- un polyphénylène sulfure dont l'unité récurrente (VII) répond à la formule suivante : 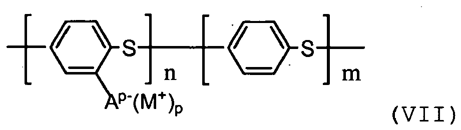
- une polyéther sulfone répondant à la formule (VIII) ci-dessous dans laquelle R₂ représente une simple liaison ou un groupe -C(CH₃)- :

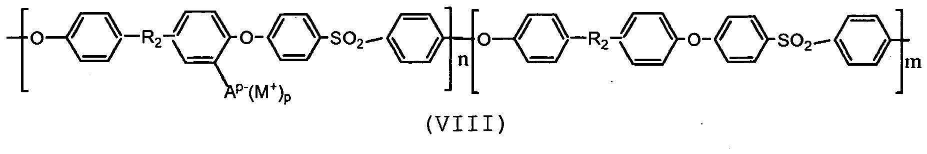

5. Procédé selon la revendication 1, **caractérisé en ce que** le polymère thermoplastique comprend des segments représentées par les formules suivantes, dans lesquelles -SO₃M, M étant Na ou Li :

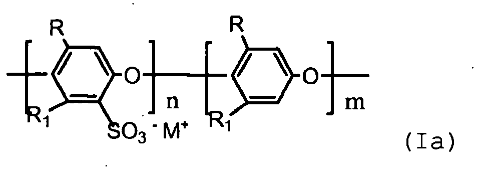

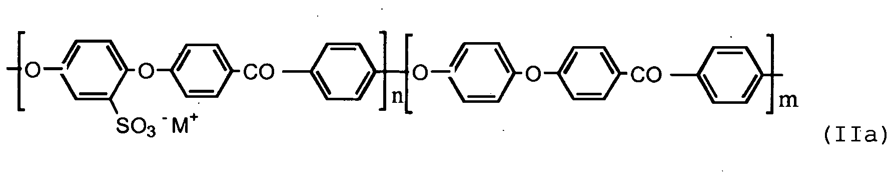

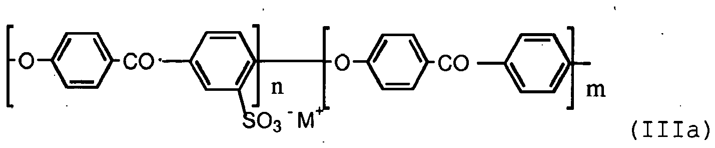

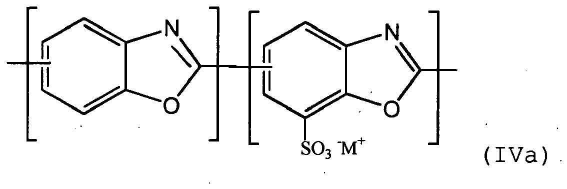

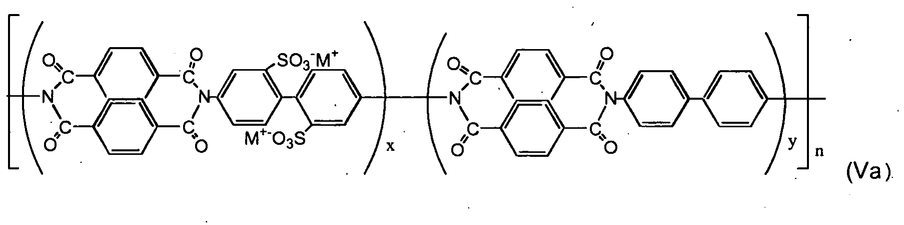

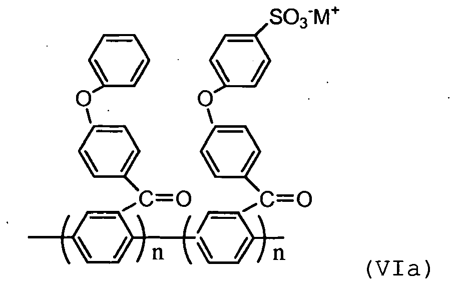

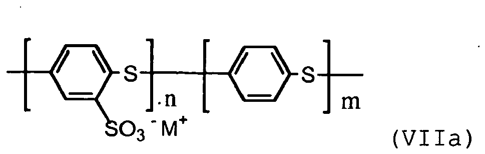

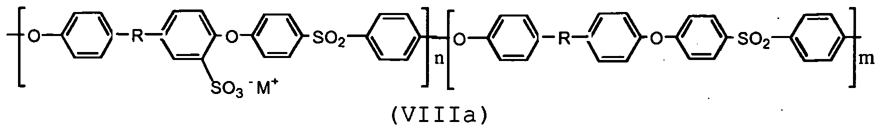

6. Procédé selon la revendication 1, caracérisé en ce que le mélange de polymère ionique thermoplastique et de plastifiant soumis à l'extrusion contient en outre une charge.

7. Procédé selon la revendication 6, **caractérisé en ce que** la charge est une charge capable d'améliorer la tenue mécanique du film de polymère obtenu après extrusion.

8. Procédé selon la revendication 7, **caractérisé en ce que** la charge est choisie parmi les fibres de verre, les fibres de carbone, les nanotubes de carbone, les microfibrilles de cellulose, les fibres d'alumine, et les fibres de polyaramide.

9. Procédé selon la revendication 6, **caractérisée en ce que** la charge est l'acide phosphatoantimonique.

## Claims

1. A process for preparing a membrane by extrusion of a thermoplastic polymer bearing alkaline ionic groups, consisting in preparing a mixture composed of a polymer having alkaline ionic groups of formula -A^{p-}(M⁺)ₚ in which A represents the anionic part of the ionic group, p represents the valency of the anionic part and M represents an alkali metal and of at least one plasticizer, in extruding the mixture obtained to form a film, then in washing the film obtained in aqueous medium to remove said plasticizer(s), **characterized in that** the plasticizer(s) has (have) a boiling point temperature above the maximum extrusion temperature of the polymer, is (are) stable with respect to the ionic groups of the polymer, is (are) soluble in water or in solvents that are miscible with water, and is (are) chosen from:
i)
- oligoethers which optionally have terminal CH₃, OH or NH₂ groups;
- R³-SO₂-R⁴ sulfones in which R³ and R⁴ represent, independently of one another, an alkyl having from 1 to 3 carbon atoms, or an aryl comprising one or more fused or unfused aromatic rings, or else R³ and R⁴ together form a biradical in order to form a ring with the SO₂ group giving a sulfolane;
- carboxylic amides corresponding to the formula HCONR⁶R⁷ in which R⁶ and R⁷ represent alkyl groups having from 1 to 4 carbon atoms;
- sulfonic amides such as tetraalkylsulfamides;
ii) the plasticizers having protic functional groups, chosen from carboxylic amide functional groups which bear 1 or 2 hydrogen atoms on the nitrogen atom, and sulfonic amide functional groups which bear 1 or 2 hydrogen atoms on the nitrogen atom, the alcohol, thiol, phenol, primary amine and secondary amine functions, the said plasticizers being chosen from:
- alkanols having at least 2 carbon atoms, the polyols derived from alkanes by replacing at least two hydrogen atoms with an OH group, and compounds having ether groups;
- monoamine, diamine or triamine oligomers and in which the nitrogen atom bears from 1 to 3 oligo(oxyethylene) groups;
- the sulfamide H₂N-SO₂-NH₂, the sulfonamides R⁸-SO₂NH₂ in which R⁸ is an alkyl group which has from 1 to 5 carbon atoms, or an aryl group comprising one or more fused or unfused aromatic rings;
- primary or secondary amides.

2. The process as claimed in claim 1, **characterized in that** the alkaline ionic group is chosen from the -O⁻M⁺ groups, sulfonate -SO₃⁻M⁺ groups, sulfate -OSO₃⁻M⁺ groups, carboxylate -CO₂⁻M⁺ groups, thiocarboxylate -C(=S)O⁻M⁺ groups, dithiocarboxylate -CS₂⁻M⁺ groups, phosphonate -PO₃²⁻(M⁺)₂ groups, sulfonylamide -SO₂NH⁻M⁺ groups, sulfonylimide (X-SO₂NSO₂-)⁻M⁺ groups, in which X is an alkyl group, a perfluorinated or partially fluorinated alkyl group, an alkenyl group, a perfluorinated or partially fluorinated alkenyl group, an oxyalkylene CH₃-(O-(CH₂)ₘ)ₙ group in which 2 ≤ m < 5 and 1 ≤ n ≤ 10, or an aryl group.

3. The process as claimed in claim 1, **characterized in that** the thermoplastic polymer is a polymer whose chain is composed of identical or different repeating units, each repeating unit comprising at least one functional group and at least one mononuclear or polynuclear aromatic group, the functional group being chosen from ester, ketone, ether, sulfide, sulfone, benzoxazole, amide and imide groups, at least some of the aromatic groups bearing an alkaline ionic group.

4. The process as claimed in claim 1, **characterized in that** the thermoplastic polymer is a polymer which comprises segments chosen from the following segments in which the indices n, m, x and y each represent a number of repeating units:
- a polyphenylene oxide corresponding to the formula I, in which R and R₁ represent independently of one another H, an alkyl group, an alkenyl group, or an aryl group comprising one or more fused or unfused aromatic rings and optionally bearing a substituent: 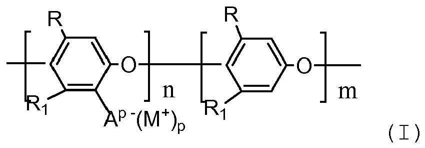
- a polyetheretherketone corresponding to the formula II below: 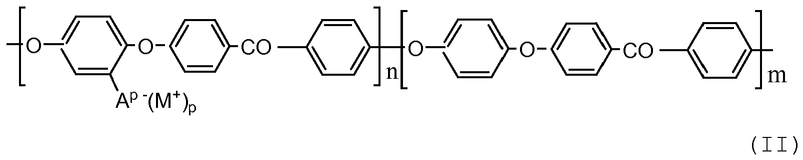
- a polyetherketone corresponding to the formula III below: 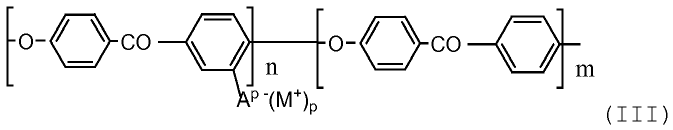
- a polybenzoxazole whose repeating unit corresponds to the formula IV below: 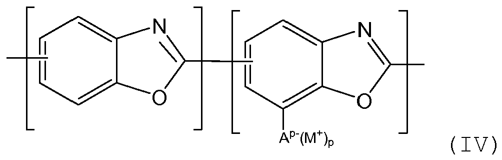
- a polyamic acid which is converted by the heat of extrusion to the polyimide (V) below: 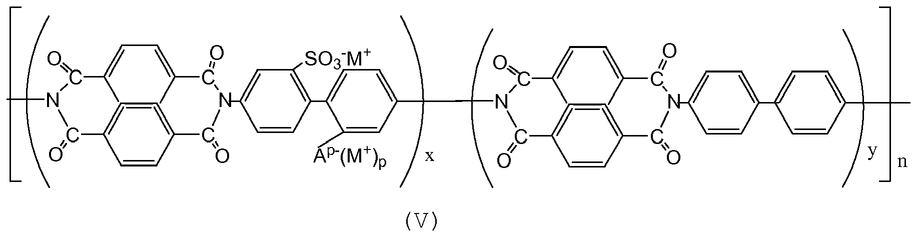
- a polyimide corresponding to the formula (V);
- a polyparaphenylene comprising, for example, units corresponding to the formula (VI) 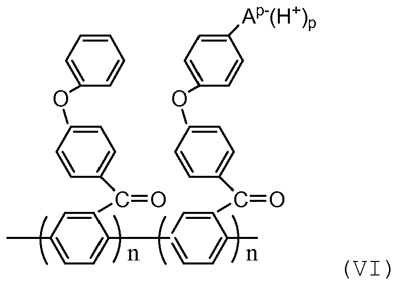
- a polyphenylene sulfide of which the repeating unit (VII) corresponds to the formula below: 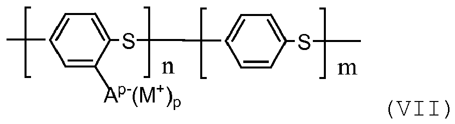
- a polyether sulfone corresponding to the formula VIII below in which R₂ represents a single bond or a -C(CH₃)- group:

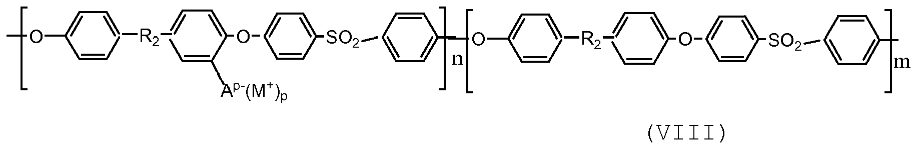

5. The process as claimed in claim 1, **characterized in that** the thermoplastic polymer comprises segments represented by the following formulae, in which -SO₃M, M being Na or Li:

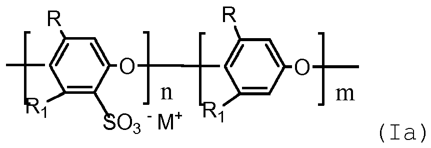

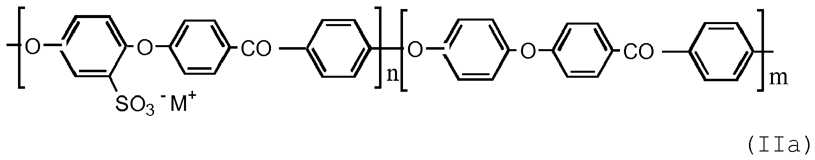

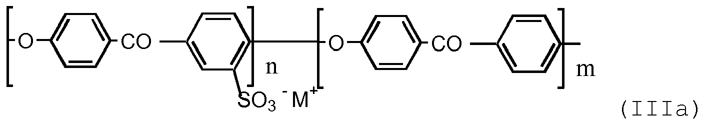

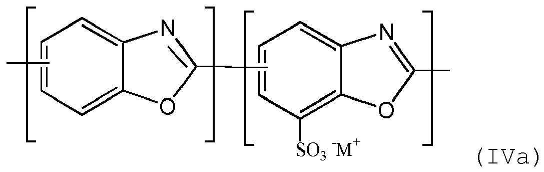

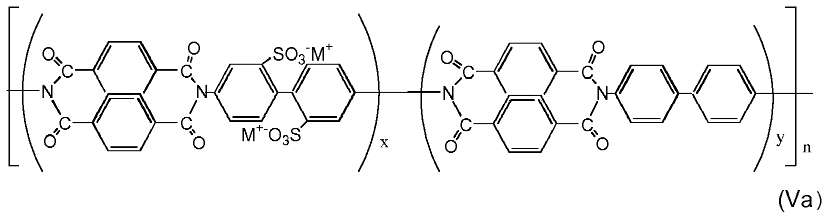

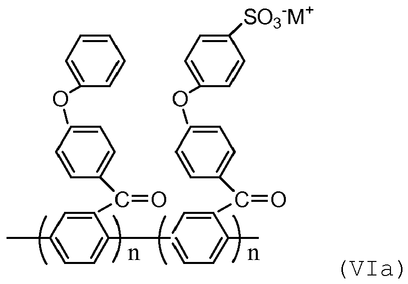

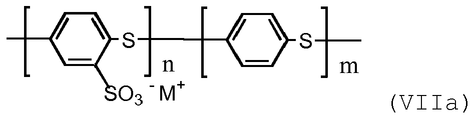

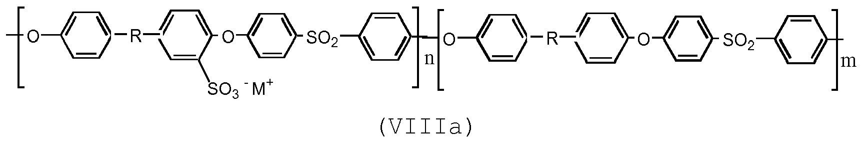

6. The process as claimed in claim 1, **characterized in that** the mixture of ionic thermoplastic polymer and plasticizer subjected to the extrusion contains, in addition, a filler.

7. The process as claimed in claim 6, **characterized in that** the filler is a filler capable of improving the mechanical strength of the polymer film obtained after extrusion.

8. The process as claimed in claim 7, **characterized in that** the filler is chosen from glass fibers, carbon fibers, carbon nanotubes, cellulose microfibrils, alumina fibers and polyaramid fibers.

9. The process as claimed in claim 6, **characterized in that** the filler is phosphatoantimonic acid.

## Patentansprüche

1. Verfahren zur Herstellung einer Membran durch Extrusion eines thermoplastischen Polymers, das alkalische ionische Gruppen trägt, das darin besteht, ein Gemisch zuzubereiten, das aus einem Polymer mit alkalischen ionischen Gruppen der Formel -A^{p-}(M⁺)ₚ besteht, wobei A den anionischen Teil der ionischen Gruppe darstellt, p die Wertigkeit des anionischen Teils darstellt und M ein alkalisches Metall und par mindestens einen Weichmacher darstellt, das gewonnene Gemisch zu extrudieren, um einen Film zu bilden, danach den gewonnenen Film in wässrigem Medium zu waschen, um den/die Weichmacher zu entfernen, **dadurch gekennzeichnet, dass** der/die Weichmacher eine Siedetemperatur über der maximalen Extrusionstemperatur des Polymers hat/haben, gegenüber den ionischen Gruppen des Polymers stabil ist/sind, löslich in Wasser oder in den mit Wasser mischbaren Lösungsmitteln ist/sind und ausgewählt ist/sind aus:
i)
- den Oligoethern, die eventuell CH₃-, OH- oder NH₂-Endgruppen haben,
- den Sulfonen R³-SO₂-R⁴, wobei R³ und R⁴ unabhängig voneinander ein Alkyl darstellen mit 1 bis 3 Kohlenstoffatomen, oder ein Aryl mit einem oder mehreren kondensierten aromatischen Ringen oder nicht, oder R³ und R⁴ bilden gemeinsam ein Biradikal, um einen Ring mit der SO₂-Gruppe zu bilden, wobei ein Sulfolan entsteht,
- den carboxylischen Amiden, die der Formel HCONR⁶R⁷ entsprechen, wobei R⁶ und R⁷ Alkylgruppen mit 1 bis 4 Kohlenstoffatomen darstellen,
- den sulfonischen Amiden, wie den Tetraalkylsulfamiden,
ii) den Weichmachern, die protische Funktionen besitzen, die aus den carboxylischen Amidfunktionen ausgewählt sind, die 1 oder 2 Wasserstoffatome auf dem Stickstoffatom tragen, und den sulfonischen Amidfunktionen, die 1 oder 2 Wasserstoffatome auf dem Stickstoffatom tragen, den Alkohol-, Thiol-, Phenol-, primären Amin- und sekundären Aminfunktionen, wobei die Weichmacher ausgewählt sind aus:
- den Alkanolen mit mindestens 2 Kohlenstoffatomen, den von Alkanen durch Ersetzen von mindestens zwei Wasserstoffatomen durch eine OH-Gruppe abgeleiteten Polyolen, und den Verbindungen mit Ethergruppen,
- den Mono-, Di- oder Triamin-Oligomeren und bei denen das Stickstoffatom 1 bis 3 Oligo(oxyethylen)gruppen trägt,
- dem Sulfamid H₂N-SO₂-NH₂, den Sulfonamiden R⁸-SO₂NH₂, wobei R⁸ eine Alkylgruppe ist, die 1 bis 5 Kohlenstoffatome besitzt, oder eine Arylgruppe, die einen oder zwei kondensierte aromatische Ringe oder nicht besitzt,
- den primären oder sekundären Amiden.

2. Verfahren nach Anspruch 1, **dadurch gekennzeichnet, dass** die alkalische ionische Gruppe aus den -O⁻M⁺-Gruppen, den Sulfonatgruppen -SO₃⁻M⁺, den Sulfatgruppen -OSO₃⁻M⁺, den Carboxylatgruppen -CO₂⁻M⁺, den Thiocarboxylatgruppen - C(=S)O⁻M⁺, den Dithiocarboxylatgruppen -CS₂⁻M⁺, den Phosphonatruppen -PO₃²⁻(M⁺)₂, den Sulfonylamidurgruppen - SO₂NH⁻M⁺, den Sulfonylimidurgruppen (X-SO₂NSO₂⁻)⁻M⁺ ausgewählt ist, wobei X eine Alklygruppe, eine perfluoridierte oder teilweise fluoridierte Alkylgruppe, eine Alkenylgruppe, eine perfluoridierte oder teilweise fluoridierte Alkenylgrupe, eine Oxyalkylengruppe CH₃-(O-(CH₂)ₘ)ₙ, bei der 2 ≤ m < 5 und 1 ≤ n ≤ 10 ist, oder eine Arylgruppe ist.

3. Verfahren nach Anspruch 1, **dadurch gekennzeichnet, dass** das thermoplastische Polymer ein Polymer ist, dessen Kette aus identischen oder unterschiedlichen rekurrenten Einheiten besteht, wobei jede rekurrente Einheit mindestens eine funktionelle Gruppe und mindestens eine aromatische mono- oder polynukleäre Gruppe umfasst, wobei die funktionelle Gruppe aus den Ester-, Keton-, Ether-, Sulfid- , Sulfon-, Benzoxazol-, Amid- und Imidgruppen ausgewählt ist, wobei mindestens ein Teil der aromatischen Gruppen eine alkalische ionische Gruppe trägt.

4. Verfahren nach Anspruch 1, **dadurch gekennzeichnet, dass** das thermoplastische Polymer ein Polymer ist, das Segmente umfasst, die aus den folgenden Segmenten ausgewählt sind, wobei die Indizes n, m, x und y jeweils eine Anzahl rekurrenter Einheiten darstellen:
- ein Polyphenylenoxid, das der Formel I entspricht, wobei R und R₁ unabhängig voneinander H, eine Alkylgruppe, eine Alkenylgruppe oder eine Arylgruppe darstellen, die einen oder mehrere aromatische kondensierte Ringe umfasst oder nicht und eventuell einen Substituenten trägt 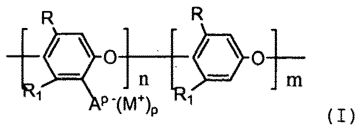
- ein Polyetheretherketon, das der folgenden Formel II entspricht 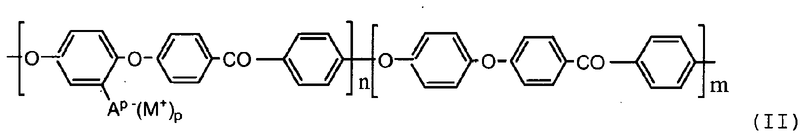
- ein Polyetherketon, das der folgenden Formel III entspricht 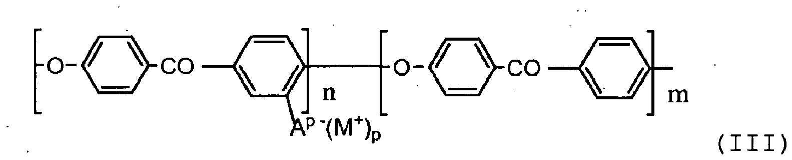
- ein Polybenzoxazol, dessen rekurrente Einheit der folgenden Formel IV entspricht: 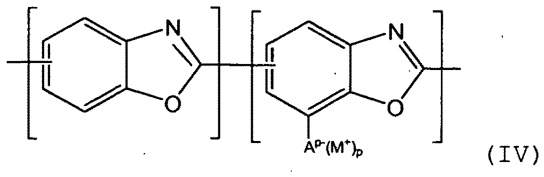
- eine Polyamsäure, die sich durch die Hitze der Extrusion in das folgende Polyimid (V) umwandelt: 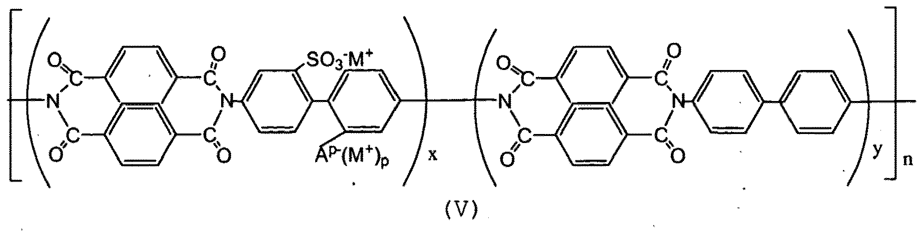
- ein Polyimid, das der Formel V entspricht,
- ein Polyparaphenylen, das beispielsweise Einheiten umfasst, die der Formel VI entsprechen 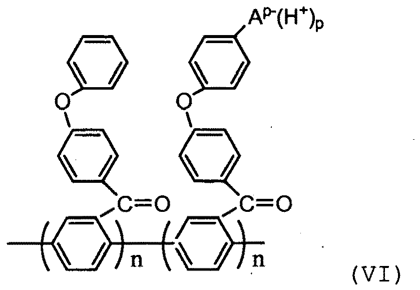
- ein Sulfid-Polyphenylen, dessen rekurrente Einheit (VII) der folgenden Formel entspricht: 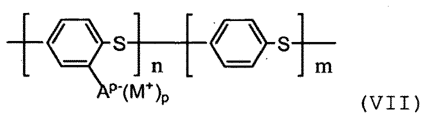
- ein Sulfonpolyether, das der folgenden Formel (VIII) entspricht, wobei R₂ eine Einfachbindung oder eine -C(CH₃)- -Gruppe darstellt:

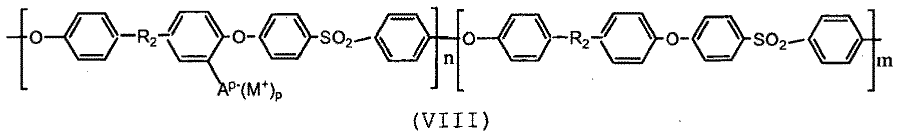

5. Verfahren nach Anspruch 1, **dadurch gekennzeichnet, dass** das thermoplastische Polymer Segmente umfasst, die durch die folgenden Formeln dargestellt sind, wobei -SO₃M, M Na oder Li sind:

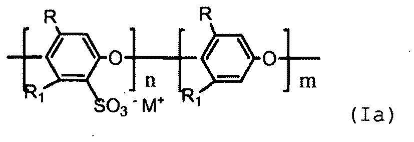

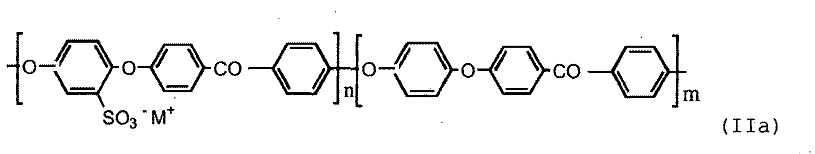

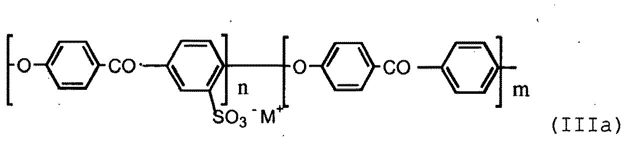

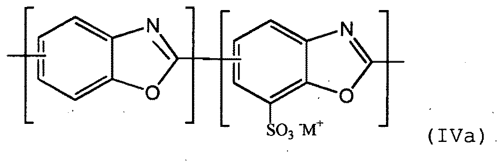

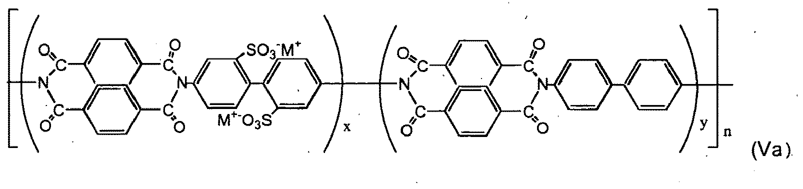

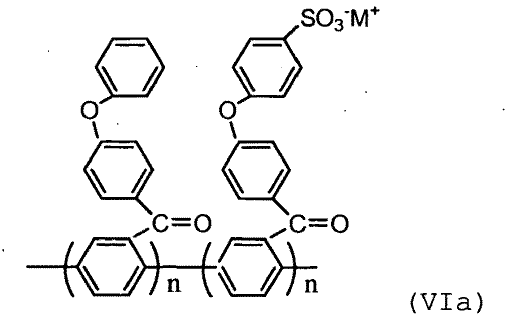

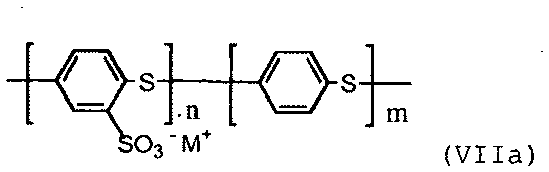

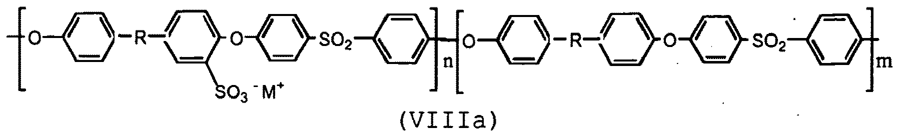

6. Verfahren nach Anspruch 1, **dadurch gekennzeichnet, dass** das Gemisch aus thermoplastischem ionischem Polymer und Weichmacher, das der Extrusion unterzogen wird, ferner eine Charge enthält.

7. Verfahren nach Anspruch 6, **dadurch gekennzeichnet, dass** die Charge eine Charge ist, die imstande ist, den mechanischen Halt des nach der Extrusion gewonnenen Polymerfilms zu verbessern.

8. Verfahren nach Anspruch 7, **dadurch gekennzeichnet**, das die Charge aus den Glasfasern, den Karbonfasern, den Karbon-Nanoröhren, den Zellulose-Mikrofibrillen, den Aluminiumoxidfasern und den Polyaramidfasern ausgewählt ist.

9. Verfahren nach Anspruch 6, **dadurch gekennzeichnet, dass** die Charge Phosphatantimonsäure ist.
